# EUROPEAN PATENT APPLICATION

(11) **EP 4 331 785 A1**
(43) Date of publication of application: **06.03.2024**
(21) Application number: 22795449.2
(22) Date of filing: 28.03.2022
(51) Int. Cl.: B25J 19/06, G05B 23/02

(54) **DIAGNOSIS SYSTEM**

(30) Priority: 26.04.2021 JP 2021073847
(71) Applicant: Nabtesco Corporation, Tokyo 102-0093 (JP); Kyokko Electric Co., Ltd., Kobe-shi Hyogo, 652-0032 (JP)
(72) Inventor: WADA, Takashi, Kobe-shi Hyogo 652-0032 (JP); ANDOH, Kiyoshi, Tokyo 102-0093 (JP); SHIRATA, Takuya, Tokyo 102-0093 (JP)
(74) Representative: Grünecker Patent- und Rechtsanwälte PartG mbB
(86) International application number: PCT/JP2022/014953
(87) International publication number: WO 2022/230532

(57) **Abstract**

A diagnostic system (10) acquires operating condition information capable of identifying an operating condition of a robot arm (12). The diagnostic system (10) acquires detection results of a plurality of sensor apparatuses (20) installed in the robot arm (12). The diagnostic system (10) estimates, by inputting the operating condition information acquired at a first point of time and the detection results of the plurality of sensor apparatuses (20) acquired at the first point of time to a simulation model, the detection result of a particular sensor apparatus (20) of the plurality of sensor apparatuses (20) at the second point of time. The diagnostic system (10) estimates a state of the particular sensor apparatus (20) by comparing the detection result of the particular sensor apparatus (20) at the second point of time, which is estimated, with the detection result of the particular sensor apparatus (20) acquired at the second point of time.

## Description

### [Technical Field]

The present invention relates to data processing technologies and particularly to diagnostic systems.

### 2. Description of the Related Art

### [Background Art]

Patent literature 1 indicated below discloses a work apparatus in which an estimation unit estimates the direction and magnitude of a force detected by the first force detection unit based on the result of detection by the second force detection unit, and an abnormality determination unit determines whether at least one of the first force detection unit or the second force detection unit is abnormal by comparing the result of estimation by the estimation unit with the result of detection by the first force detection unit.

### [Related Art Documents]

### [Patent Documents]

[Patent Literature 1] Japanese Unexamined Patent Application Publication No. 2020-39397

### [Disclosure of Invention]

### [Problems to be Solved by the Invention]

The technology disclosed in Patent literature 1 estimates the detection result of the second sensor from the detection result of the first sensor, and an improvement in estimation accuracy is called for.

The present invention addresses the issue described above, and a purpose thereof is to provide a technology of increasing the accuracy of estimating the detection result of a sensor installed in an equipment having a movable part that is driven by receiving a driving force.

### [Means for Solving the Problem]

A diagnostic system according to an aspect of the present invention includes: an operating condition information acquisition unit that acquires operating condition information capable of identifying an operating condition of equipment having a movable part that is driven by receiving a driving force; a detection result acquisition unit that acquires detection results of a plurality of sensors installed in the equipment; a detection result estimation unit that estimates, by inputting the operating condition information acquired at a first point of time and the detection results of the plurality of sensors acquired at the first point of time to a simulation model, the detection result of a particular sensor of the plurality of sensors at the second point of time; and a sensor state estimation unit that estimates a state of the particular sensor by comparing the detection result of the particular sensor at the second point of time, which is estimated, with the detection result of the particular sensor of the plurality of sensors acquired at the second point of time.

Optional combinations of the aforementioned constituting elements, and implementations of the present invention in the form of apparatuses, methods, computer programs, and recording mediums recording computer programs may also be practiced as additional modes of the present invention.

### [Advantageous Effects]

According to the present invention, it is possible to increase the accuracy of estimating the detection result of a sensor installed in an equipment having a movable part that is driven by receiving a driving force.

### [Brief Description of Drawings]

Fig. 1 shows a configuration of a diagnostic system of the first exemplary embodiment;
Fig. 2 is a block diagram showing functional blocks of the sensor apparatus of the first exemplary embodiment;
Fig. 3 is a block diagram showing functional blocks of the diagnostic apparatus of the first exemplary embodiment;
Fig. 4 is a flowchart showing the operation of the diagnostic system of the first exemplary embodiment;
Fig. 5 is a block diagram showing functional blocks of the diagnostic apparatus of the second exemplary embodiment; and
Fig. 6 is a flowchart showing the operation of the diagnostic system of the second exemplary embodiment.

### [Mode for Carrying Out the Invention]

An outline of an exemplary embodiment will be described. More and more sensors are being installed in equipment to diagnose the state of the equipment such as machine tools remotely. In order to perform an appropriate diagnosis of the sensor, however, it is necessary to determine whether the sensor is in a reliable state with high accuracy. In the exemplary embodiment, a technology is proposed of estimating the detection result of a sensor by taking into account the operating condition of the equipment, in a diagnostic system configured to estimate the detection result of the sensor installed in an equipment and estimate the state of the sensor by using the estimation result. Thereby, the accuracy of estimation of the sensor detection result is improved, and the result of estimation of the sensor state is improved.

### <First exemplary embodiment>

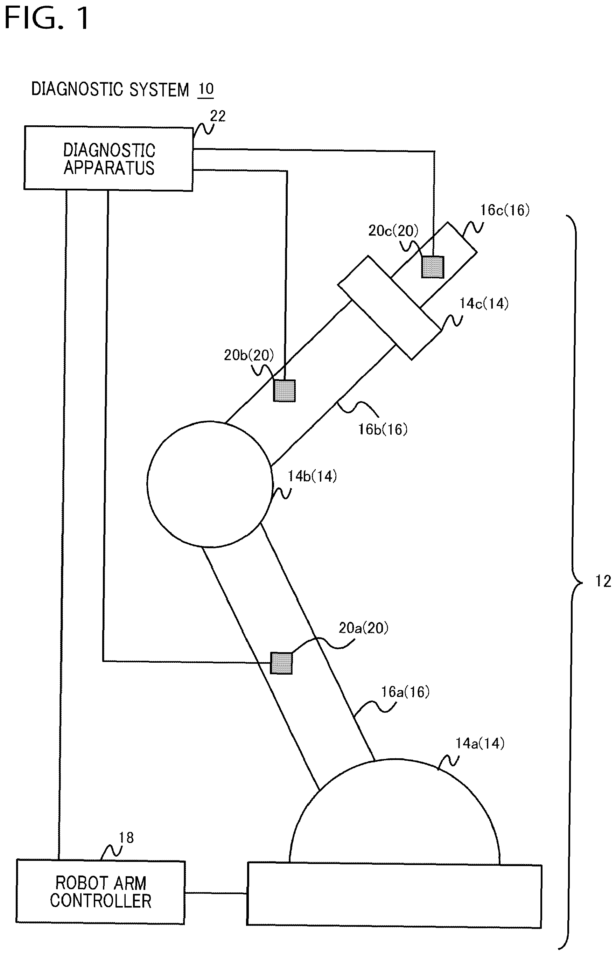

Fig. 1 shows the configuration of the diagnostic system 10 of the first exemplary embodiment. The diagnosis system 10 diagnoses the state of a sensor installed in an equipment (in the first exemplary embodiment, the robot arm 12) having a movable part that is driven by receiving a driving force. The robot arm 12 includes a first movable part 14a, a second movable part 14b, and a third movable unit 14c (referred to as "movable part(s) 14" collectively). Each of the plurality of movable parts 14 includes a mechanical element that is driven by receiving a driving force such as hydraulic pressure or electric power. For example, the movable part is a joint member. The robot arm 12 of the exemplary embodiment includes three movable parts 14 and performs a 3-axis operation. In one variation, the robot arm 12 may include 6 movable parts 14 and perform a 6-axis operation.

The robot arm 12 further includes a first link 16a, a second link 16b, and a third link 16c (referred to as "link(s) 16" collectively). The first link 16a is a link member that connects the first movable part 14a and the second movable part 14b. The second link 16b is a link member that connects the second movable part 14b and the third movable part 14c. The third link 16c is a link member beyond the third movable part 14c.

A robot arm controller 18 transmits a first control signal that controls the operation of the first movable part 14a to the first movable part 14a, based on the posture, movement, etc. that should be taken by the robot arm 12. Further, the robot arm controller 18 transmits a second control signal that controls the operation of the second movable part 14b to the second movable part 14b. Further, the robot arm controller 18 transmits a third control signal that controls the operation of the third movable part 14c to the third movable part 14c. Each of the first control signal, the second control signal, and the third control signal includes operating condition information that defines the operating condition of each movable part 14. The operating condition include, for example, data that specifies or defines the mode of operation of the movable part 14 (e.g., speed, angle, angular speed, acceleration, operation time, etc.).

The diagnostic system 10 is a parasystem constructed independently of the main system related to the operation of the robot arm 12 and can be added later to the existing main system. The diagnostic system 10 includes a first sensor apparatus 20a, a second sensor apparatus 20b, a third sensor apparatus 20c, and a diagnostic apparatus 22. When the first sensor apparatus 20a, the second sensor apparatus 20b, and the third sensor apparatus 20c are collectively referred to, they are referred to as "sensor apparatus(es) 20".

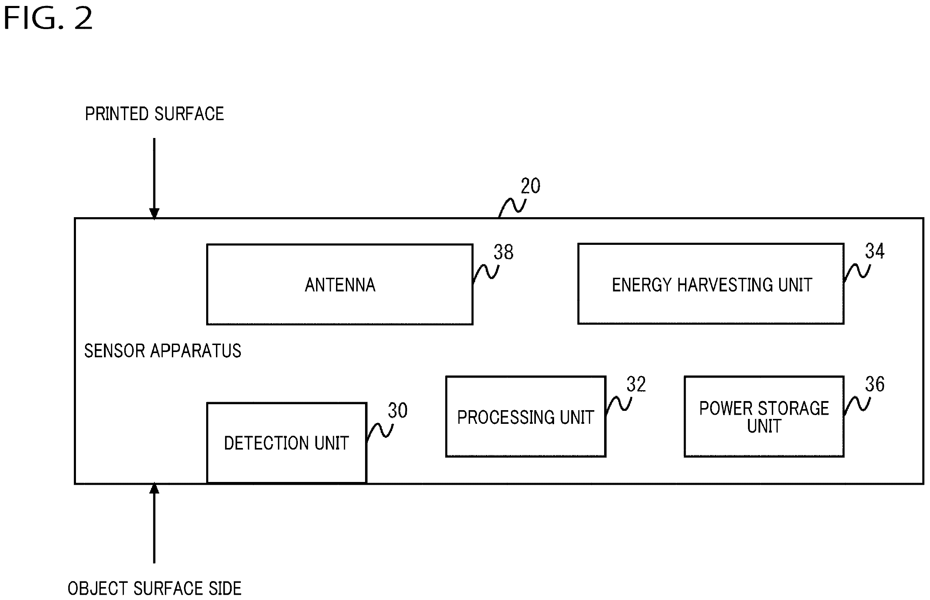

Fig. 2 is a block diagram showing functional blocks of the sensor apparatus 20 of the first exemplary embodiment. The blocks depicted in the block diagrams of this specification are implemented in hardware by devices/electronic circuits/mechanical apparatuses exemplified by a processor, a CPU, and a memory of a computer, and in software by a computer program, etc. Fig. 2 depicts functional blocks implemented by the cooperation of these elements. Therefore, it will be understood by those skilled in the art that the functional blocks may be implemented in a variety of manners by a combination of hardware and software.

The sensor apparatus 20 is attached as a nameplate to the surface of an article having a predetermined physical structure (hereinafter also referred to as an "object"). The object may be any of various types of electronic equipment, electrical equipment, mechanical apparatuses, parts, or finished products. In the first exemplary embodiment, the plurality of sensor apparatuses 20 are assumed to be installed in the link 16 of the robot arm 12, but in a variation, at least some of the plurality of sensor apparatuses 20 may be installed in the movable part 14 of the robot arm 12. The sensor apparatus 20 includes a detection unit 30, a processing unit 32, an energy harvesting unit 34, a power storage unit 36, and an antenna 38.

The sensor apparatus 20 as a nameplate displays various information related to the object on the outer surface (the printed surface of Fig. 2). Further, members corresponding to the functional blocks shown in Fig. 2 are integrally provided in a sheet shape in the sensor apparatus 20. The sheet shape means that the length of the sensor apparatus 20 in the thickness direction is shorter than either the vertical length or the horizontal length of the sensor apparatus 20. Given, for example, that the vertical length and horizontal length of the sensor apparatus 20 are several centimeters, the length of the sensor apparatus 20 in the thickness direction is 5 millimeters or less. Preferably, the length of the sensor apparatus 20 in the thickness direction is 1 millimeter or less.

The detection unit 30 is provided in contact with or in proximity to the object to measure the state (which can be said to be a physical quantity) related to the object. The detection unit 30 of the first sensor apparatus 20a measures the state related to the position of installation of the first sensor apparatus 20a in the robot arm 12, i.e., the state related to the first link 16a in the robot arm 12 in the case of the first exemplary embodiment. The detection unit 30 of the second sensor apparatus 20b measures the state related to the position of installation of the second sensor apparatus 20b in the robot arm 12, i.e., the state related to the second link 16b in the robot arm 12 in the case of the first exemplary embodiment. The detection unit 30 of the third sensor apparatus 20c measures the state related to the position of installation of the third sensor apparatus 20c in the robot arm 12, i.e., the state related to the third link 16c in the robot arm 12 in the case of the first exemplary embodiment.

The state related to the object measured by the detection unit 30 may be either one or both of the state of the object itself (the state of either the interior or the surface of the object or both) and the state around the object (i.e., the environment surrounding the object). Further, the state related to the object may be one type of physical state or physical quantity or a combination of a plurality of types of physical states or physical quantities. For example, the state related to the object may be vibration (e.g., 3-axis acceleration) and/or temperature. Further, the state related to the object may be the velocity and/or pressure of a fluid flowing in a power transmission path provided in the object, which may be measured based on the reflected intensity of ultrasonic waves or radio waves.

In the first exemplary embodiment, the detection unit 30 measures a vibration at the position of sensor installation (which can be said to be the location of sensor installation). The detection unit 30 outputs a signal (also referred to as a "detection signal") based on the measurement result (detection result) to the processing unit 32.

The processing unit 32 generates information (also referred to as "sensor data" hereinafter) output from antenna 38, based on the measurement result of the detection unit 30 and, in this exemplary embodiment, the detection signal output from the detection unit 30. The processing unit 32 may execute a predetermined calculation (for example, various filter processes, abnormality diagnostic processes implemented by artificial intelligence functions, etc.) based on the detection signal output from the detection unit 30 and may generate sensor data including the calculation result.

The antenna 38 as an output unit outputs data based on the measurement result of the detection unit 30 and, in the embodiment, outputs the sensor data generated by the processing unit 32 outside. The antenna 38 as a communication unit may transmit the sensor data to an external apparatus by using Wi-Fi (registered trademark), BLE (Bluetooth Low Energy (registered trademark)), NFC (Near Field Communication), etc. In the embodiment, the sensor data transmitted from the antenna 38 of the sensor apparatus 20 is transmitted to the diagnostic apparatus 22 via a wireless communication network and a wired communication network.

The energy harvesting unit 34 converts energy existing in the environment surrounding the sensor apparatus 20 into electric power (so-called energy harvesting) and supplies the generated electric power as the electric power for operating each functional block of the sensor apparatus 20. The energy harvesting unit 34 may perform known energy harvesting based on at least one type of energy including temperature, humidity, radio waves such as Wi-Fi, electromagnetic waves from around the sensor apparatus 20 (including radioactive rays and cosmic rays and also including electromagnetic noise emitted from electric motors, etc.), vibration, sound (including ultrasonic waves), light (including visible light, infrared light, and ultraviolet light), and the flow of a fluid or powders (wind, waves, etc.). The antenna 38 may include the function of the energy harvesting unit 34, in which case the antenna 38 may execute data communication and energy harvesting in a time-division manner.

The power storage unit 36 stores the electricity generated by the energy harvesting unit 34 and supplies the stored electric power as the electric power for operating each functional block of the sensor apparatus 20. In the embodiment, the detection unit 30, the processing unit 32, and the antenna 38 of the sensor apparatus 20 can operate based on the power supplied from the energy harvesting unit 34 and can also operate on the electric power supplied from the power storage unit 36. The power storage unit 36 may be a capacitor (including an electric double layer capacitor) or a secondary battery (for example, a lithium ion battery, a solid lithium ion battery, an air battery).

Referring back to Fig. 1, the diagnostic apparatus 22 is an information processing apparatus connected to the first sensor apparatus 20a, the second sensor apparatus 20b, and the third sensor apparatus 20c via a wireless communication network and a wired communication network composed of an access point, a switch, a router, etc. (not shown). The diagnostic apparatus 22 executes various data processes for diagnosing the state of a particular sensor apparatus 20 of the first sensor apparatus 20a, the second sensor apparatus 20b, and the third sensor apparatus 20c. Hereinafter, the particular sensor apparatus 20 diagnosed to measure the state will be referred to as "diagnosis target sensor". The diagnosis target sensor in the first exemplary embodiment is the third sensor apparatus 20c.

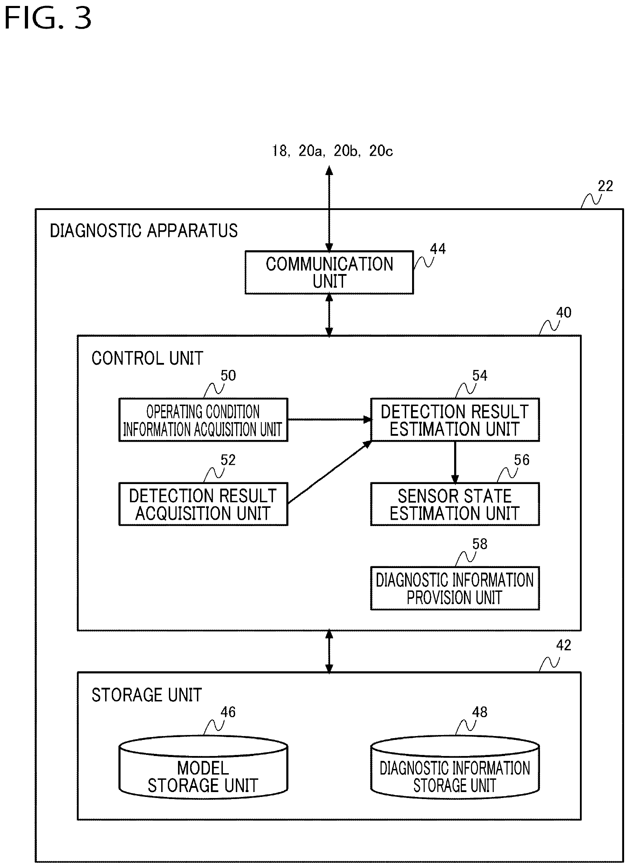

Fig. 3 is a block diagram showing functional blocks of the diagnostic apparatus 22 of the first exemplary embodiment. The diagnostic apparatus 22 includes a control unit 40, a storage unit 42, and a communication unit 44. The control unit 40 executes various data processes. The storage unit 42 stores data referenced or updated by the control unit 40. The communication unit 44 communicates with the external apparatus according to a predetermined communication protocol. In the first exemplary embodiment, the control unit 40 transmits/receives data to or from the robot arm controller 18, the first sensor apparatus 20a, the second sensor apparatus 20b, and the third sensor apparatus 20c via the communication unit 44.

The storage unit 42 includes a model storage unit 46 and a diagnostic information storage unit 48. The model storage unit 46 stores data for a simulation model for estimating the detection result of the diagnosis target sensor. The simulation model will be discussed in more detail later. The diagnostic information storage unit 48 stores diagnostic information indicating an estimated result related to the state of the diagnosis target sensor. The diagnostic information may include information as a diagnosis result indicating the state of the diagnosis target sensor (e.g., normal or abnormal) and information indicating the date and time when the state of the diagnosis target sensor is diagnosed.

The control unit 40 includes an operating condition information acquisition unit 50, a detection result acquisition unit 52, a detection result estimation unit 54, a sensor state estimation unit 56, and a diagnostic information provision unit 58. A computer program in which the functions of these plurality of function blocks are implemented may be stored in a predetermined recording medium or may be installed in the storage of the diagnostic apparatus 22 via the recording medium. Further, the computer program may be downloaded via a communication network and installed in the storage of the diagnostic apparatus 22. The CPU of the diagnostic apparatus 22 may exhibit the function of each function block by reading the computer program into the main memory and executing the computer program.

The operating condition information acquisition unit 50 acquires, from the robot arm controller 18, a plurality of items of operating condition information (in the first exemplary embodiment, the first control signal, the second control signal, and the third control signal) capable of identifying the operating conditions of the plurality of movable parts 14 transmitted from the robot arm controller 18 to the robot arm 12. In a variation, the operating condition information acquisition unit 50 may acquire, from the robot arm 12, the plurality of items of operating condition information transmitted from the robot arm controller 18, or acquire the information from a relay apparatus (not shown) that relays communication between the robot arm controller 18 and the robot arm 12.

The detection result acquisition unit 52 acquires detection results of a plurality of sensor apparatuses 20 installed in the robot arm 12. Specifically, the detection result acquisition unit 52 acquires first sensor data transmitted from the first sensor apparatus 20a and indicating the detection result of the first sensor apparatus 20a, second sensor data transmitted from the second sensor apparatus 20b and indicating the detection result of the second sensor apparatus 20b, and third sensor data transmitted from the third sensor apparatus 20c and indicating the detection result of the third sensor apparatus 20c. The first sensor data, the second sensor data, and the third sensor data of the first exemplary embodiment all include information (e.g., amplitude and frequency) related to a vibration at the sensor installation position.

The simulation model of the first exemplary embodiment will be described. The simulation model is a mathematical model that receives the operating condition information acquired at the first point of time and the detection results (in the first exemplary embodiment, vibration information) of a plurality of sensor apparatuses 20 indicated by a plurality of items of sensor data acquired at the first point of time and estimates the detection result of a predetermined diagnosis target sensor among the plurality of sensor apparatuses 20 at the second point of time. The mathematical model can be said to be a calculation formula or a function. Alternatively, the simulation model may be a model of a so-called digital twin that simulates the operation of the movable part 14 of the robot arm 12 and the detection result of the sensor apparatus 20. The second point of time in the first exemplary embodiment is assumed to be the same as the first point of time, but, in a variation, the second point of time may be a point of time later than the first point of time.

The simulation model of the first exemplary embodiment is a mathematical model to which the operating conditions of a plurality of movable parts 14 are input. Further, the simulation model of the first exemplary embodiment is a mathematical model to which are input the detection results of the sensor apparatuses 20, of the plurality of sensor apparatuses 20, other than the diagnosis target sensor. For example, the simulation model may be a regression equation in which the operating condition indicated by the first control signal, the operating condition indicated by the second control signal, the operating condition indicated by the third control signal, the detection result of the first sensor apparatus 20a indicated by the first sensor data, and the detection result of the second sensor apparatus 20b indicated by the second sensor data are explanatory variables, and the detection result of the third sensor apparatus 20c, which is the diagnosis target sensor, is an objective variable.

When the simulation model of the first exemplary embodiment is built, a set of actual values of the operating condition indicated by the first control signal, the operating condition indicated by the second control signal, the operating condition indicated by the third control signal, the detection result of the first sensor apparatus 20a indicated by the first sensor data, the detection result of the second sensor apparatus 20b indicated by the second sensor data, and the detection result of the third sensor apparatus 20c indicated by the third sensor data may be collected as sample data. The coefficients of the explanatory variables may be determined and data for the simulation model may be generated by performing multiple regression analysis based on a plurality of items of sample data.

The detection result estimation unit 54 estimates the detection result of the diagnosis target sensor at the second point of time by reading the data for the simulation model stored in the model storage unit 46, and inputting the operating condition information acquired at the first point of time and the detection results of the plurality of sensor apparatuses 20 acquired at the first point of time to the simulation model. In the first exemplary embodiment, the detection result estimation unit 54 inputs the operating conditions of the plurality of movable parts 14 to the simulation model. Further, the detection result estimation unit 54 inputs the detection results of the sensors, of the plurality of sensor apparatuses 20, other than diagnosis target sensor to the simulation model.

Specifically, the detection result estimation unit 54 inputs the operating condition indicated by the first control signal, the operating condition indicated by the second control signal, and the operating condition indicated by the third control signal, which are acquired at the first point of time, to the simulation model. Further, the detection result estimation unit 54 inputs the detection result of the first sensor apparatus 20a indicated by the first sensor data and the detection result of the second sensor apparatus 20b indicated by the second sensor data, which are acquired at the first point of time, to the simulation model. The detection result estimation unit 54 then acquires the detection result (in the first exemplary embodiment, an estimated value related to vibration) of the third sensor apparatus 20c, i.e., the diagnosis target sensor, at the second point of time, which result is output from the simulation model.

The sensor state estimation unit 56 estimates the state of the diagnosis target sensor by comparing the detection result of the diagnosis target sensor at the second point of time, which is estimated by the detection result estimation unit 54, with the detection result of the diagnosis target sensor acquired at the second point of time.

In the first exemplary embodiment, the sensor state estimation unit 56 compares the estimated value of the detection value of the third sensor apparatus 20c at the second point of time, i.e., the detection result of the diagnosis target sensor at the second point of time, with the actual detection result (measured value) of the third sensor apparatus 20c indicated by the third sensor data acquired at the second point of time, i.e., the detection result of the diagnosis target sensor acquired at the second point of time. When the difference between the estimated value of the detection result of the third sensor apparatus 20c and the actual detection result (measured value) of the third sensor apparatus 20c deviates from a predetermined tolerance range, the sensor state estimation unit 56 estimates that the state of the third sensor apparatus 20c is abnormal. Appropriate values of the tolerance range may be determined by the knowledge of the developer of the diagnostic system 10 or experiments using the diagnostic system 10 (e.g., experiments using the normal third sensor apparatus 20c and the abnormal third sensor apparatus 20c, respectively).

The sensor state estimation unit 56 stores diagnostic information including a result of estimation of the state of the diagnosis target sensor and a date and time of estimation in the diagnostic information storage unit 48. The diagnostic information provision unit 58 transmits the diagnostic information stored in the diagnostic information storage unit 48 to an external apparatus not shown (e.g., the terminal of a maintenance operator) as a response to a request from outside or periodically.

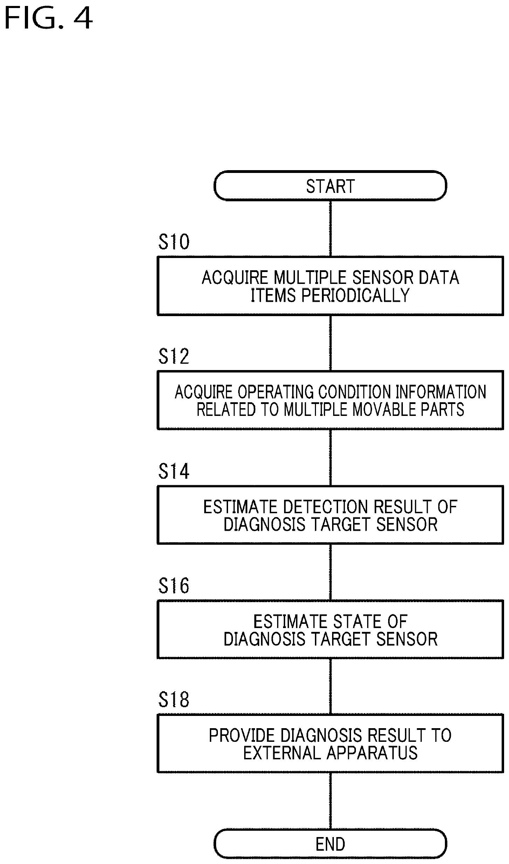

The operation of the diagnostic system 10 of the first exemplary embodiment having the above configuration will be described. Fig. 4 is a flowchart showing the operation of the diagnostic system 10 of the first exemplary embodiment. It will be assumed that the first point of time and the second point of time are the same.

The detection unit 30 of the first sensor apparatus 20a periodically detects the vibration at the position of sensor installation in the robot arm 12. The antenna 38 of the first sensor apparatus 20a transmits the first sensor data indicating the result of detection by the detection unit 30 to the diagnostic apparatus 22. In parallel to this, the second sensor apparatus 20b also detects the vibration at the position of sensor installation and transmits the second sensor data indicating the detection result to the diagnostic apparatus 22. Similarly, the third sensor apparatus 20c detects the vibration at the position of sensor installation and transmits the third sensor data indicating the detection result to the diagnostic apparatus 22. The detection result acquisition unit 52 of the diagnostic apparatus 22 acquires the first sensor data, the second sensor data, and the third sensor data periodically transmitted from the first sensor apparatus 20a, the second sensor apparatus 20b, and the third sensor apparatus 20c (S10) .

The operating condition information acquisition unit 50 of the diagnostic apparatus 22 acquires the first control signal, the second control signal, and the third control signal transmitted by the robot arm controller 18 to the robot arm 12 at a given point of time (first point of time) from the robot arm controller 18 (S12).

The detection result estimation unit 54 of the diagnostic apparatus 22 inputs, to the simulation model, the operating condition of the first movable part 14a indicated by the first control signal, the operating condition of the second movable part 14b indicated by the second control signal, the operating condition of the third movable part 14c indicated by the third control signal, the control signals being acquired by the operating condition information acquisition unit 50 at the first point of time. The detection result estimation unit 54 also inputs, to the simulation model, the detection result indicated by the first sensor data and the detection result indicated by the second sensor data, the detection results being acquired by the detection result acquisition unit 52 at the first point of time. The detection result estimation unit 54 acquires the detection result (estimated value) of the diagnosis target sensor (third sensor apparatus 20c) at the second point of time (in this case, the same point of time as the first point of time) estimated by the simulation model (S14).

The sensor state estimation unit 56 of the diagnostic apparatus 22 estimates the state of the third sensor apparatus 20c, i.e., the diagnosis target sensor, by comparing the detected result (estimated value) of the third sensor apparatus 20c obtained from the simulation model with the detection result (actual measured value) indicated by the third sensor data acquired by the detection result acquisition unit 52 at the first point of time (S16). The sensor state estimation unit 56 stores diagnostic information indicating the estimated result of the state of the third sensor apparatus 20c in the diagnostic information storage unit 48. The diagnostic information provision unit 58 of the diagnostic apparatus 22 provides diagnostic information related to the third sensor apparatus 20c stored in the diagnostic information storage unit 48 to the external apparatus (S18).

According to the diagnostic system 10 of the first exemplary embodiment, the result of detection by the diagnosis target sensor apparatus 20 installed in the robot arm 12 is estimated by using parameters including the operating condition of the movable part 14 of the robot arm 12. Thereby, the estimation accuracy can be increased. That is, according to the diagnostic system 10, an estimated value approximating the detection result occurring when the diagnosis target sensor apparatus 20 is normal can be obtained. Thereby, the accuracy of estimation of the state of the diagnosis target sensor apparatus 20 can be increased as well.

### <Second exemplary embodiment>

The second exemplary embodiment of the present invention will be described mainly highlighting differences from the exemplary embodiment described above, and a description of common features will be omitted as appropriate. The features of the second exemplary embodiment can of course be combined with features of the exemplary embodiment and variations described above as desired. Of the components of the second exemplary embodiment, those components that are the same as or correspond to the components of the exemplary embodiment described above will be described by denoting them with the same reference numerals as appropriate.

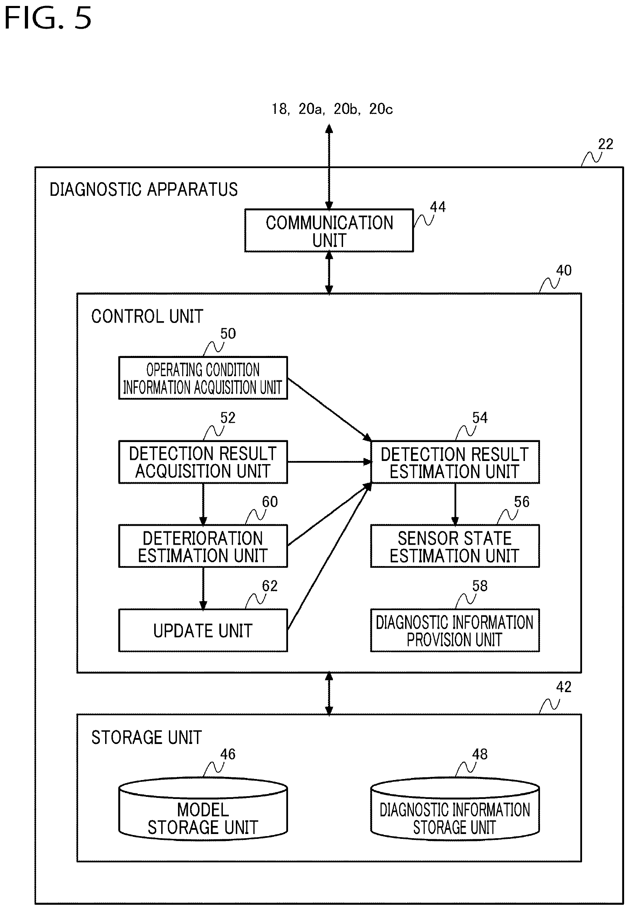

The configuration of the diagnostic system 10 of the second exemplary embodiment is the same as the configuration of the diagnostic system 10 of the first exemplary embodiment shown in Fig. 1. The diagnostic system 10 of the second exemplary embodiment also diagnoses the state of the sensor apparatus 20 installed in the robot arm 12 in the same manner as the diagnostic system 10 of the first exemplary embodiment. Fig. 5 is a block diagram showing functional blocks of the diagnostic apparatus 22 of the second exemplary embodiment. The diagnostic apparatus 22 of the second exemplary embodiment further includes a deterioration estimation unit 60 and an update unit 62 in addition to the functional blocks of the diagnostic apparatus 22 of the first exemplary embodiment.

In addition to the data for the simulation model described in the first exemplary embodiment, the model storage unit 46 further stores data for a deterioration estimation model for estimating the degree of deterioration of the robot arm 12. The deterioration estimation model is a mathematical model that accepts a plurality of items of sensor data (first sensor data, second sensor data, and third sensor data) indicating detection results of the plurality of sensor apparatuses 20 as inputs, and estimates the degree of deterioration of the robot arm 12. The first sensor data, the second sensor data, and the third sensor data of the second exemplary embodiment may be information related to vibration at the sensor installation position as in the first exemplary embodiment.

For example, the deterioration estimation model may be a regression equation in which the detection result of the first sensor apparatus 20a indicated by the first sensor data, the detection result of the second sensor apparatus 20b indicated by the second sensor data, and the detection result of the third sensor apparatus 20c indicated by the third sensor data are explanatory variables, and a deterioration index value indicating the degree of deterioration of the robot arm 12 is an objective variable. When the deterioration estimation model is built, a set of actual values of the detection result of the first sensor apparatus 20a, the detection result of the second sensor apparatus 20b, and the detection result of the third sensor apparatus 20c, and the degree of deterioration of the robot arm 12 may be collected as sample data. The coefficients of the explanatory variables may be determined and data for the deterioration estimation model may be generated by performing multiple regression analysis based on a plurality of items of sample data.

Further, the model storage unit 46 stores data for a plurality of simulation models adapted to the degree of deterioration of the robot arm 12. The plurality of simulation models may be generated based on sample data (described in the first exemplary embodiment) collected from the robot arms 12 having mutually different degrees of deterioration. In association with a plurality of deterioration index values, the model storage unit 46 may store simulation models adapted to the degrees of deterioration indicated by the respective deterioration index values.

The deterioration estimation unit 60 estimates the degree of deterioration of the robot arm 12 based on the detection results of the plurality of sensor apparatuses 20. Specifically, the deterioration estimation unit 60 reads the data for the deterioration estimation model stored in the model storage unit 46 and inputs the detection results of the plurality of sensor apparatuses 20 transmitted from the plurality of sensor apparatuses 20 to the deterioration estimation model, thereby estimating the degree of deterioration of the robot arm 12.

The update unit 62 updates the simulation model used by the detection result estimation unit 54 based on the degree of deterioration of the robot arm 12 estimated by the deterioration estimation unit 60. In the second exemplary embodiment, the data for the simulation model adapted to the degree of deterioration of the robot arm 12 estimated by the deterioration estimation unit 60 is read from the plurality of simulation models stored in the model storage unit 46, and the data for the read simulation model is delivered to the detection result estimation unit 54.

The detection result estimation unit 54 is a simulation model updated by the update unit 62, and, in the second exemplary embodiment, estimates the detection result of the diagnosis target sensor by using the simulation model delivered from the update unit 62 and adapted to the degree of deterioration of the robot arm 12.

The sensor state estimation unit 56 estimates the state of the diagnosis target sensor when the degree of deterioration of the robot arm 12 is equal to or greater than a predetermined threshold value. On the condition that the degree of deterioration of the robot arm 12 is equal to or greater than the predetermined threshold value, the detection result estimation unit 54 estimates the detection result of the diagnosis target sensor and, consequently, the sensor state estimation unit 56 estimates the state of the diagnosis target sensor. An appropriate threshold value may be determined based on the knowledge of the developer of the diagnostic system 10, experiments using the diagnostic system 10, sensor failure probability for each degree of deterioration of the robot arm 12, etc.

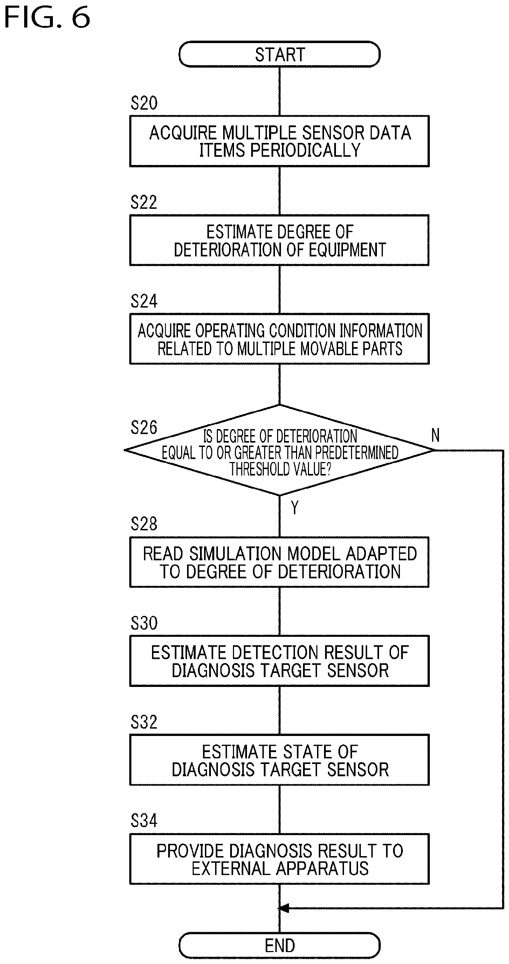

The operation of the diagnostic system 10 of the second exemplary embodiment having the above configuration will be described. Fig. 6 is a flowchart showing the operation of the diagnostic system 10 of the second exemplary embodiment. As in the first exemplary embodiment, the detection result acquisition unit 52 of the diagnostic apparatus 22 acquires the first sensor data, the second sensor data, and the third sensor data periodically transmitted from the first sensor apparatus 20a, the second sensor apparatus 20b, and the third sensor apparatus 20c (S20). The deterioration estimation unit 60 of the diagnostic apparatus 22 inputs the detection result of the first sensor apparatus 20a indicated by the first sensor data, the detection result of the second sensor apparatus 20b indicated by the second sensor data, and the detection result of the third sensor apparatus 20c indicated by the third sensor data to the deterioration estimation model. The deterioration estimation unit 60 acquires a deterioration index value indicating the degree of deterioration of the robot arm 12 derived by using the deterioration estimation model (S22).

The operating condition information acquisition unit 50 of the diagnostic device 22 acquires the first control signal, the second control signal, and the third control signal transmitted by the robot arm controller 18 to the robot arm 12 at a given point of time (first point of time) from the robot arm controller 18 (S24). When the degree of deterioration of the robot arm 12 is equal to or greater than a predetermined threshold (Y in S26), the update unit 62 reads the data for the simulation model adapted to the deterioration degree of the robot arm 12, i.e., the data for the simulation model associated with the deterioration index value acquired in S22, from the model storage unit 46 and delivers the data to the detection result estimation unit 54 (S28).

Since the subsequent steps S30-S34 are the same as the steps S14-S18 of the diagnostic system 10 of the first exemplary embodiment shown in Fig. 4 so that a description thereof is omitted. When the degree of deterioration of the robot arm 12 is less than the above threshold value (N in S26), step S28 and the subsequent steps are skipped. According to the diagnostic system 10 of the second exemplary embodiment, the estimation accuracy of the detection result of the diagnosis target sensor can be improved by using a simulation model adapted to the degree of deterioration of the robot arm 12. In further accordance with the diagnosis system 10, an abnormality of the sensor can be efficiently detected by estimating the state of the diagnosis target sensor when the deterioration of the robot arm 12 has progressed to a certain degree.

Given above is a description of the present invention based on the first exemplary embodiment and the second exemplary embodiment. The exemplary embodiments are intended to be illustrative only and it will be understood by those skilled in the art that various modifications to combinations of constituting elements and processes described in the exemplary embodiments are possible and that such modifications are also within the scope of the present invention.

A variation related to the second exemplary embodiment will be described as a first variation. The plurality of sensor apparatuses 20 installed in the robot arm 12 detect a vibration at the respective sensor installation positions as in the first exemplary embodiment. The deterioration estimation unit 60 of the diagnostic apparatus 22 estimates the degree of deterioration of the robot arm 12 by comparing the vibration convergence time at the sensor installation position calculated based on the detection results of the plurality of sensor apparatuses 20 with the vibration convergence time estimated based on the operating condition information.

Specifically, the deterioration estimation model stored in the model storage unit 46 may receive the input of detection result of each of the plurality of sensor apparatuses 20 to derive the vibration convergence time (measured value) at the installation position of each sensor apparatus 20. The vibration convergence time can be said to be the time during which the vibration continues and may be derived based on a known criterion. For example, the vibration convergence time may be the time elapsed since the vibration having a magnitude equal to or greater than a predetermined first threshold is detected until the vibration equal to or greater than a second threshold, which is less than the first threshold value, is not detected. The deterioration estimation model may alternatively receive the input of operating condition information indicated by each of the first control signal, the second control signal, and the third control signal and calculate the vibration convergence time (estimated value) at the position of installation of each sensor apparatus 20 based on a predetermined evaluation function. The evaluation function may output the vibration convergence time at the sensor installation position mapped in advance to each operating condition indicated by the operating condition information.

For each of the first sensor apparatus 20a, the second sensor apparatus 20b, and the third sensor apparatus 20c, the deterioration estimation model may compare the vibration convergence time (measured value) with the vibration convergence time (estimated value) at each sensor installation position to estimate the degree of deterioration of the robot arm 12 based on the result of comparison. For example, when the vibration convergence time (measured value)>the vibration convergence time (estimated value) at 0 or 1 sensor installation positions, the degree of deterioration may be estimated to be low. Further, when the vibration convergence time (measured value)>the vibration convergence time (estimated value) at two installation positions, the degree of deterioration may be estimated to be medium. Further, when the vibration convergence time (measured value)>the vibration convergence time (estimated value) at three sensor installation positions, the degree of deterioration may be estimated to be high.

The deterioration estimation unit 60 of the diagnostic device 22 inputs vibration information at the sensor installation position indicated by each of the plurality of items of sensor data transmitted from the plurality of sensor apparatuses 20 to the deterioration estimation model. Further, the deterioration estimation unit 60 inputs the operating condition indicated by each of the first control signal, the second control signal, and the third control signal transmitted from the robot arm controller 18 to the deterioration estimation model. The deterioration estimation unit 60 then acquires an index value indicating the degree of deterioration of the robot arm 12 estimated by the deterioration estimation model. Since the subsequent steps are the same as those in the second exemplary embodiment, a description thereof will be omitted. According to the configuration of this variation, the degree of deterioration of the robot arm 12 can be accurately estimated based on the vibration convergence time at each sensor installation position.

A variation related to both the first exemplary embodiment and the second exemplary embodiment will be described. In the first exemplary embodiment and the second exemplary embodiment, the sensor apparatus 20 is installed between (link 16) a plurality of movable parts 14 provided in the robot arm 12, but, in a variation, the sensor apparatus 20 may be installed in a plurality of movable parts 14.

A variation related to both the first exemplary embodiment and the second exemplary embodiment will be described as a third variation. In the first exemplary embodiment and the second exemplary embodiment, the diagnosis target sensor is assumed to be the third sensor apparatus 20c, but any one or a plurality of the first sensor apparatus 20a, the second sensor apparatus 20b, and the third sensor apparatus 20c may be defined as the diagnosis target sensor. In this case, the model storage unit 46 of the diagnostic device 22 may store simulation models that differ depending on the diagnosis target sensor for estimation of the state of each diagnosis target sensor. The detection result estimation unit 54 and the sensor state estimation unit 56 may estimate the state of each diagnosis target sensor by using a simulation model corresponding to each of one or more diagnosis target sensors.

The sensor apparatus 20 of the exemplary embodiments described above is assumed to be a sensor apparatus as a nameplate. In one variation, the sensor apparatus 20 may not be a nameplate and may be a sheet-type or coin-type sensor apparatus that can be easily attached to an object.

Of the exemplary embodiments disclosed in this specification, those in which a plurality of functions are provided in a distributed manner may be provided by aggregating some or all of the plurality of functions. Conversely, a plurality of functions provided in an aggregated manner may be provided by distributing some of all of the plurality of functions. Regardless of whether the functions are aggregated or distributed, they may be configured so as to achieve the object of the invention.

Any combination of the exemplary embodiment and the variation described above will also be useful as an embodiment of the present invention. New embodiments created by the combination provide the advantages of exemplary embodiment and the variation combined. It will also be understood by skilled persons that the functions that the constituting elements recited in the claims should achieve are implemented either alone or in combination by the constituting elements shown in the exemplary embodiment and the variations.

The technologies according to the exemplary embodiments and variations may be defined by the following items.

### [Item 1]

A diagnostic system including:
an operating condition information acquisition unit that acquires operating condition information capable of identifying an operating condition of equipment having a movable part that is driven by receiving a driving force;
a detection result acquisition unit that acquires detection results of a plurality of sensors installed in the equipment;
a detection result estimation unit that estimates, by inputting the operating condition information acquired at a first point of time and the detection results of the plurality of sensors acquired at the first point of time to a simulation model, the detection result of a particular sensor of the plurality of sensors at the second point of time; and
a sensor state estimation unit that estimates a state of the particular sensor by comparing the detection result of the particular sensor at the second point of time, which is estimated, with the detection result of the particular sensor of the plurality of sensors acquired at the second point of time.

The second point of time may be the same as the first point of time or different from the first point of time. The sensor state estimation unit can be said to be a sensor abnormality detection unit that detects an abnormality in the state of the sensor.

This diagnostic system estimates the detection result of the particular sensor by taking into account the operating conditions of the equipment, thereby improving the accuracy of estimation of the detection result of the sensor and improving the accuracy of estimation of the state of the sensor.

### [Item 2]

The diagnosis system according to item 1, wherein
the equipment includes a plurality of movable parts, and
the detection result estimation unit estimates the detection result of the particular sensor at the second point of time by inputting operating conditions of the plurality of movable parts to the simulation model.

This diagnostic system estimates, in the case the equipment includes a plurality of movable parts, the detection result of the particular sensor based on the operating conditions of the plurality of movable parts, thereby further increasing the accuracy of estimation of the detection result of the sensor.

### [Item 3]

The diagnosis system according to item 1 or 2, wherein
the detection result estimation unit estimates the detection result of the particular sensor at the second point of time by inputting the detection results of the sensors, of the plurality of the sensors, other than particular sensor to the simulation model.

This diagnostic system excludes the detection result of the particular sensor that is likely to be indicating an abnormal value, thereby estimating an abnormality of the state of the sensor accurately.

### [Item 4]

The diagnosis system according to any one of items 1 through 3, further including:
a deterioration estimation unit that estimates a degree of deterioration of the equipment based on the detection results of the plurality of sensors; and
an update unit that updates the simulation model based on the degree of deterioration of the equipment estimated by the deterioration estimation unit.

This diagnostic system uses a simulation model adapted to the degree of deterioration of the equipment, thereby improving the accuracy of estimation of the detection result of the particular sensor.

### [Item 5]

The diagnosis system according to item 4, wherein
the sensor state estimation unit estimates the state of the particular sensor when the degree of deterioration of the equipment estimated by the deterioration estimation unit is equal to or greater than a predetermined threshold value.

The diagnostic system can detect, by estimating the state of the particular sensor when the deterioration of the equipment has progressed, an abnormality of that sensor efficiently.

### [Item 6]

The diagnosis system according to item 4 or 5, wherein
the plurality of sensors detect a vibration at respective positions of sensor installation, and
the deterioration estimation unit estimates the degree of deterioration of the equipment by comparing a vibration convergence time at the sensor installation position calculated based on the detection results of the plurality of sensors with a vibration convergence time estimated based on the operating condition information.

This diagnostic system can estimate the degree of deterioration of the equipment accurately based on the vibration convergence time at the sensor installation position.

### [Industrial Applicability]

The technology of this disclosure is applicable to a diagnostic system.

### [Explanation of Reference Numerals]

10 diagnostic system, 12 robot arm, 14 movable part, 20 sensor apparatus, 22 diagnostic apparatus, 50 operating condition information acquisition unit, 52 detection result acquisition unit, 54 detection result estimation unit, 56 sensor state estimation unit, 60 deterioration estimation unit, 62 update unit.

## Claims

1. A diagnostic system comprising:
an operating condition information acquisition unit that acquires operating condition information capable of identifying an operating condition of equipment having a movable part that is driven by receiving a driving force;
a detection result acquisition unit that acquires detection results of a plurality of sensors installed in the equipment;
a detection result estimation unit that estimates, by inputting the operating condition information acquired at a first point of time and the detection results of the plurality of sensors acquired at the first point of time to a simulation model, the detection result of a particular sensor of the plurality of sensors at the second point of time; and
a sensor state estimation unit that estimates a state of the particular sensor by comparing the detection result of the particular sensor at the second point of time, which is estimated, with the detection result of the particular sensor of the plurality of sensors acquired at the second point of time.

2. The diagnosis system according to claim 1, wherein
the equipment includes a plurality of movable parts, and
the detection result estimation unit estimates the detection result of the particular sensor at the second point of time by inputting operating conditions of the plurality of movable parts to the simulation model.

3. The diagnosis system according to claim 1 or 2, wherein
the detection result estimation unit estimates the detection result of the particular sensor at the second point of time by inputting the detection results of the sensors, of the plurality of the sensors, other than particular sensor to the simulation model.

4. The diagnosis system according to any one of claims 1 through 3, further comprising:
a deterioration estimation unit that estimates a degree of deterioration of the equipment based on the detection results of the plurality of sensors; and
an update unit that updates the simulation model based on the degree of deterioration of the equipment estimated by the deterioration estimation unit.

5. The diagnosis system according to claim 4, wherein
the sensor state estimation unit estimates the state of the particular sensor when the degree of deterioration of the equipment estimated by the deterioration estimation unit is equal to or greater than a predetermined threshold value.

6. The diagnosis system according to claim 4 or 5, wherein
the plurality of sensors detect a vibration at respective positions of sensor installation, and
the deterioration estimation unit estimates the degree of deterioration of the equipment by comparing a vibration convergence time at the sensor installation position calculated based on the detection results of the plurality of sensors with a vibration convergence time estimated based on the operating condition information.
